# EUROPÄISCHE PATENTSCHRIFT

(11) **EP 2 381 276 B1**
(45) Veröffentlichungstag und Bekanntmachung des Hinweises auf die Patenterteilung: **30.04.2014**
(21) Anmeldenummer: 11163468.9
(22) Anmeldetag: 21.04.2011
(51) Int. Cl.: G01V 13/00, G01V 3/10

(54) **Verfahren zur Validierung, Kalibrierung und/oder Funktionsüberprüfung einer Fremdkörpererkennungseinrichtung**
Method for validating, calibrating and/or testing the functionality of a foreign body detection device
Procédé de validation, de calibrage et/ou de contrôle de fonction d'un dispositif de reconnaissance de corps étrangers

(30) Priorität: 23.04.2010 DE 102010018217
(43) Veröffentlichungstag der Anmeldung: 26.10.2011
(73) Patentinhaber: rondotest GmbH & Co.KG, 94551 Lalling (DE)
(72) Erfinder: Zachariat, Jürgen, 94551 Lalling (DE)
(74) Vertreter: Benninger, Johannes

(56) Entgegenhaltungen:
- WO-A1-2009/112852
- JP-A- 2006 329 907
- JP-A- 2010 107 357
- US-A- 4 726 434

## Beschreibung

Die vorliegende Erfindung betrifft ein Verfahren zur Validierung, Kalibrierung und/oder Funktionsüberprüfung einer Fremdkörpererkennungseinrichtung bei der Förderung von Lebensmitteln, Arzneimitteln oder anderen Produkten mit den Merkmalen des unabhängigen Anspruchs 1. Die Erfindung betrifft weiterhin ein System mit den Merkmalen des unabhängigen Anspruchs 14 sowie einen Probenkörper zur Verwendung bei dem Verfahren bzw. bei dem System.

Aus dem Stand der Technik sind bereits Probenkörper zur Verwendung in Anlagen und Einrichtungen zur Fremdkörpererkennung bekannt. So offenbart bspw. die JP 2007047086 AA einen würfelförmigen Probenkörper, der aus Metall besteht. Weiterhin ist in der DE 690 15 293 T2 ein Verfahren zum Überprüfen eines Metalldetektorgerätes offenbart. Die Probenkörper werden üblicherweise durch die Anlagen geleitet, um deren einwandfreie Funktion überprüfen zu können, was die Ausgabe eines Auslöse-, Fehler- oder sonstigen Signals bei einer einwandfreien Erkennung des Probenkörpers voraussetzt und erfordert.

Ein weiterer Probenkörper zur Funktionsüberprüfung einer Überwachungseinrichtung ist in der WO 2009/112852 A1 beschrieben. Der Probekörper besteht aus einer laminierten Karte mit einem Teststück. Weiter sind Kennzeichnungen auf der Karte angebracht. Jede Kennzeichnung beinhaltet einen Barcode, welcher Daten zum Teststück enthält. Die Überwachungseinrichtung beinhaltet eine Leseeinrichtung für den Barcode der Kennzeichnung. Über eine Barcodeerfassung wird überprüft, ob der korrekte Probenkörper die Überwachungseinrichtung passieren wird.

Soll eine nachvollziehbare und nachprüfbare Funktionsüberprüfung der Fremdkörpererkennungseinrichtung erfolgen, so muss zur Erstellung von Prüfberichten eine Dokumentation, die Daten im Hinblick auf die verwendeten Probenkörper berücksichtigt, stattfinden. Die Erstellung einer solchen Dokumentation ist oftmals umständlich und zeitaufwändig. Andererseits ist die Dokumentation unverzichtbar, da ansonsten keine einwandfreie Überprüfung im Rahmen einer Zertifizierung und/oder einer Abnahme möglich ist.

Als nachteilig an den bisher eingesetzten und aus dem Stand der Technik bekannten Verfahren kann in erster Linie der erforderliche hohe manuelle Aufwand und die mangelnde Automatisierbarkeit bzw. Wiederholbarkeit genannt werden. Auch sind die Prüfkörper aufgrund ihrer nicht maschinenlesbaren Kennzeichnung in der Regel nur für eine manuelle und damit zwangsläufig recht langsame Verarbeitung der Prüfdaten geeignet.

Eine vorrangige Aufgabe der vorliegenden Erfindung besteht darin, ein Verfahren und ein System zur Verfügung zu stellen, welche die Dokumentationen im Rahmen von Funktionsüberprüfungen einer Fremdkörpererkennungseinrichtung vereinfachen und erleichtern.

Diese Aufgabe wird durch ein Verfahren mit den Merkmalen des Anspruchs 1 und durch ein System mit den Merkmalen des Anspruchs 14 gelöst. Zudem trägt der in dem Verfahren und dem System eingesetzte neuartige Probenkörper zur Lösung der genannten Aufgabe bei.

Die vorliegende Erfindung umfasst ein Verfahren zur Kalibrierung, Validierung und/oder Funktionsüberprüfung einer Fremdkörpererkennungseinrichtung. Die Fremdkörpererkennungseinrichtung kann zur Förderung von Lebensmitteln, Arzneimitteln oder anderen Produkten dienen. Die Produkte können sowohl lose als auch in verpackter Form untersucht werden. Das Verfahren sieht mindestens einen Probenkörper vor, der von der Fremdkörpererkennungseinrichtung eindeutig zu identifizieren ist. Im Verlauf des Verfahrens können auch mehrere Probenkörper verwendet werden, insbesondere zur aufeinander folgenden Prüfung von verschiedenen Metallsorten. Dies sind i.d.R. Eisen, ein Nichteisenmetall wie Aluminium oder Messing sowie Edelstahl, insbesondere V2A und/oder V4A. Darüber hinaus können weitere Metallsorten geprüft werden.

Das beanspruchte Verfahren kann zeitgleich mit der Förderung von Lebensmitteln, Arzneimitteln oder anderen Produkten durchgeführt werden. Auch kann der Probenkörper ohne Lebensmittel, Arzneimittel oder andere Produkte entlang eines Transportweges geführt werden. Generell kann der Probenkörper die unterschiedlichsten zu detektierenden Materialien, auch nichtmetallische aufweisen, wie dies in den unabhängigen Ansprüchen allgemein definiert ist. Für die meisten Anwendungsfälle wird der Probenkörper zwar metallische Elemente aufweisen, doch ist dies keineswegs zwingend, da auch Glas, Keramik oder andere Fremdkörper für die Fremdkörpererkennung wichtig sein können, da sie insbesondere in Lebensmitteln zu Problemen führen können. Das erfindungsgemäße Verfahren bezieht sich somit gleichermaßen auf die Erkennung nichtmetallischer Materialien wie bspw. Glas oder Keramik o. dgl. mehr. Insbesondere sind damit nichtmetallische Fremdkörper gemeint, die in Lebensmitteln als besonders problematische Fremdkörper einzustufen sind, bspw. wegen ihrer scharfen Kanten oder wegen ihrer Splittercharakteristik.

Wenn im vorliegenden Zusammenhang häufig von einer Validierung der Fremdkörpererkennungseinrichtung die Rede ist, so ist dies dem in der Branche üblichen Sprachgebrauch geschuldet. So meint der häufig verwendete Branchenausdruck der "Validierung" die Überprüfung, ob ein bestimmter Prozess normenkonform abläuft und durchgeführt wird. Der teilweise verwendete Begriff der "Verifizierung" meint dagegen in erster Linie die Überprüfung, ob ein bestimmter Prozess für die formulierten Ziele geeignet ist. Teilweise finden sich auch die Begriffe "Verifizierung" und "Qualifizierung", womit jeweils in erster Linie die Überprüfung der Geräteempfindlichkeiten und des einwandfreien Ansprechens und Auslösens der eingesetzten Geräte gemeint ist. Somit kann es sich entsprechend dem üblichen Sprachgebrauch bei der hier vorliegenden Erfindung insbesondere um eine Validierung handeln. Im Wesentlichen jedoch liefert die Erfindung ein umfassendes Verfahren und ein entsprechendes System zur vereinfachten und verbesserten Prüfung und/oder Validierung und/oder Verifizierung und/oder Kalibrierung der Fremdkörperdetektion. In diesem Zusammenhang werden einerseits vereinheitlichte Probenkörper vorgeschlagen, die sich aufgrund ihrer Gestaltung und Systematisierbarkeit hervorragen für eine Normierung und Standardisierung eignen. Diese normierten und hinsichtlich ihrer Farbe, ihrer Kontur und ihren metallischen oder nichtmetallischen Bestandteilen standardisierbaren Probenkörper werden erfindungsgemäß eingesetzt, um bereits im Einsatz befindliche oder noch zu entwickelnde Fremdkörperdetektoren nach einem standardisierten Verfahren testen, überprüfen und hinsichtlich ihrer Auflösung und Erkennungsrate hin validieren zu können. In diesem Zusammenhang schlägt die Erfindung zudem ein vereinfachtes Erkennungsverfahren, bspw. mittels optischer Scanner und nachgeschalteten Datenverarbeitungseinrichtungen vor, um das Testprocedere weitgehend automatisiert ablaufen lassen zu können.

Der einzusetzende Probenkörper kann unterschiedliche Formgebungen aufweisen. So kann der Probenkörper bspw. quaderförmig ausgebildet sein. Auch kann er runde Formgebungen aufweisen. Eine bevorzugte Form des Probenkörpers sieht eine flachzylindrische Gestalt vor, die sich sehr gut zur Stapelung in einem Aufbewahrungssystem eignet. Zudem lassen sich solche flachzylindrischen Formen leicht anhand ihrer Durchmesser und Dicken voneinander unterscheiden. Zu erwähnen ist jedoch, dass eine Kugelform am besten für den vorgesehenen Einsatzzweck geeignet ist, da sich die Kugelform besonders gut zum Einbringen in Lebensmittel und zum anschließenden rückstandsfreien Reinigen eignet und hierfür eine ideale Form bildet. Eine leicht abgeflachte Oberfläche dient vorzugsweise zur Aufbringung des verwendeten maschinenlesbaren Codes. Eine solche Fläche für die Aufbringung einer Codierung kann bspw. einen Durchmesser von ca. 15 mm aufweisen. Auf diese optional zu verstehende Abflachung kann je nach verwendeter Scaneinheit und deren Ablesegüte auch entfallen.

Der Probenkörper kann insbesondere zumindest teilweise aus metallischem oder metallähnlichem bzw. metallhaltigem Material ausgebildet. Besonders geeignet sind für die gewünschten Einsatzzwecke sog. Präzisionskugeln, die bspw. aus der Wälzlagerindustrie stammen können, da bei diesen Kugeln sowohl die exakten Abmessungen als auch ihre genaue Stoff- bzw. Metallzusammensetzung bekannt ist. Diese vorrangig eingesetzten Präzisionskugeln bestehen aus bereits aus geeignetem Metall und sind in allen gewünschten Genauigkeitsklasse, bspw. zwischen 10 ... 100 verfügbar (vgl. ISO 3290 und DIN 5401). Der Anwender erhält auf diese Weise sehr genau herstellbare Referenzprodukte, die zudem in guter Qualität über die Kugel- oder Wälzlagerproduzenten in ausreichenden Mengen verfügbar sind. Beispielsweise kann der Probenkörper ein Element enthalten, welches aus Metall gebildet ist. Auch kann der Probenkörper unter Umständen selbst oder Teile des Probenkörpers durch Metall ausgebildet sein. Darüber hinaus kann das zu detektierende Element im Probenkörper aus den unterschiedlichsten Materialien gebildet sein, bspw. Glas, Keramik o. dgl., da solche Fremdkörper je nach Konfiguration der Fremdkörpererkennungseinrichtung ebenfalls detektiert werden müssen.

Wahlweise kann der Probenkörper zumindest teilweise aus elastischen Materialien gebildet sein. Auch sind Varianten denkbar, bei denen der Probenkörper mit einem elastischen Abschnitt, bspw. mit einer Schnur versehen ist, die eine Wiederauffinden in der Probe und das Herausziehen des Probenkörpers erleichtert. Die zu detektierende Probe mit dem metallischen oder nichtmetallischen Fremdkörper kann sich bei einer solchen Variante vorzugsweise am Ende des flexiblen Teils und nicht im zylindrischen oder kugelförmigen Teil des Probenkörpers befinden.

Eine weitere alternative Ausführungsvariante eines scheibenförmigen oder zylindrischen Probenkörpers kann mit einem geraden, rohrförmigen oder aus Vollmaterial bestehenden flexiblen und gegenüber seiner Länge relativ dünnen Abschnitt verbunden sein, wobei an dem freien Ende des flexiblen Abschnittes, das nicht mit dem Probenkörper verbunden ist, das zu detektierende Element platziert ist. Bei Verwendung eines rohrförmigen flexiblen Abschnittes kann das zu detektierende Element dort eingefügt und das offene Ende des Abschnittes durch einen Verschlussdeckel, einen Klebepunkt o. dgl. verschlossen sein. Im Übrigen kann der Probenkörper den zuvor erwähnten Varianten entsprechen, wobei die Größe je nach Bedarf differieren kann. Der Probenkörper sollte zumindest so groß sein, dass die Zuordnungskennzeichnung auf seiner Oberfläche problemlos Platz findet. Ein solcher Probenkörper mit einem am Ende eines flexiblen Abschnittes befindlichen zu detektierenden Element kann einer zu überprüfenden Stoff-, Substanz- oder Lebensmittelprobe lose beigelegt werden und muss dort nicht unbedingt eingetaucht sein. Generell gilt für alle erwähnten Varianten der Probenkörper, dass diese wahlweise auch aus flexiblen Materialen gefertigt sein können.

Eine weitere Variante sieht einen Probenkörper in Kartenform vor, bei welcher der Fremdkörper in eine Vertiefung eingelegt und/oder eingeklebt sein kann, die bspw. durch einen Tiefziehvorgang in die Karte eingebracht wurde. Der Fremdkörper kann bspw. auch beim Herstellvorgang der Karte mit dem Kartenmaterial umspritzt werden. Der Fremdkörper kann wiederum aus den unterschiedlichsten metallischen oder nichtmetallischen Werkstoffen bestehen, je nach gewünschtem Einsatzzweck.

Der Probenkörper wird zur Erzeugung eines Antwortsignals entlang eines Transportweges geführt. Der Transportweg kann derjenige Weg sein, auf dem während des Betriebes der Fremdkörpererkennungseinrichtung Lebensmittel oder andere Produkte geführt werden. Ist die Fremdkörpererkennungseinrichtung als Metalldetektor ausgebildet, kann der Transportweg entlang des Erfassungsbereiches des Metalldetektors verlaufen. Das von der Fremdkörpererkennungseinrichtung bzw. von der Detektionseinrichtung erzeugte Antwortsignal oder Auslösesignal kann derart sein, dass eine Benachrichtigung ergeht, ob und in einigen Ausführungsformen auch welche Fremdkörper durch die Fremdkörpererkennungseinrichtung identifiziert worden sind. Beispielsweise kann der Transportweg entlang eines Fließbandes verlaufen. In der praktischen Durchführung des Validierungsverfahrens ist es allerdings in der Regel erforderlich, dass die prüfende Person die Anzeige- oder Signaleinheit der Fremdkörpererkennungs- bzw. Detektionseinrichtung beobachtet und bei Ausgabe eines korrekten Auslösesignals nach dem Durchlaufen eines Probenkörpers selbst entscheidet und seinem mobilen Handeingabegerät oder dem alternativ zu verwendenden stationären Gerät mitteilt, ob eine korrekte Detektion (ja/nein) und/oder eine Ausscheidung (ja/nein) des Produkts und/oder des Probenkörpers erfolgt ist. Anschließend ist eine manuelle Eingabe vom Prüfer erforderlich, die in das zu erstellende Prüfprotokoll aufgenommen wird.

Auf der Oberfläche des Probenkörpers ist eine erste Zuordnungskennzeichnung angebracht. Die Zuordnungskennzeichnung wird im Rahmen der Funktionsüberprüfung der Fremdkörpererkennungseinrichtung vor dem Durchlauf durch diese von einer Detektionseinheit erfasst. Diese Detektionseinheit ist entweder ein stationäres Gerät, das der Fremdkörpererkennungseinrichtung räumlich und funktional zugeordnet ist. Oder die Detektionseinheit ist ein mobiles Gerät, das der Prüfer mitführt und in das er seine Eingaben macht. Vorzugsweise hat dieses mobile Gerät die erforderlichen Scaneinrichtungen zur optischen Erfassung der verschiedenen Codierungen, z.B. Barcodes etc. Die Zuordnungskennzeichnung kann zweidimensional ausgebildet sein. Sie könnte jedoch auch dreidimensional ausgebildet sein, bspw. durch Einbringung einer zusätzlichen Farbe in der Codierung. Beispielsweise kann die Zuordnungskennzeichnung als Barcode ausgebildet sein. Auch kann die Zuordnungskennzeichnung weiteren zweidimensionalen Gestaltungen unterliegen. Zur Erfassung kann die Detektionseinheit bei dieser Ausführungsform einen Barcode-Scanner beinhalten. Durch die Detektionseinheit kann eine eindeutige Zuordnung der Zuordnungskennzeichnung zu auf der Detektionseinheit abgelegten probenkörperspezifischen Daten erfolgen.

Um die Dokumentation der Funktionsüberprüfung weiter zu vereinfachen, kann im Rahmen der vorliegenden Erfindung eine zweite Zuordnungskennzeichnung für die Fremdkörpererkennungseinrichtung vorhanden sein. Die zweite Zuordnungskennzeichnung kann beispielsweise, ebenso wie die erste Zuordnungskennzeichnung, als Barcode ausgebildet sein. Durch die Detektionseinheit kann nach Lesen der ersten und/oder zweiten Zuordnungskennzeichnung eine eindeutige Zuordnung der ersten und/oder zweiten Zuordnungskennzeichnung zu der jeweiligen Fremdkörpererkennungseinrichtung und/oder zu dem jeweiligen Probenkörper erfolgen. Die zweite Zuordnungskennzeichnung kann beispielsweise direkt an der jeweiligen Fremdkörpererkennungseinrichtung angeordnet sein.

In einer Ausführungsform der vorliegenden Erfindung befindet sich eine Kennzeichnung auf der Verpackung des Produkts. Hierbei kann es sich insbesondere um ein verpacktes Produkt handeln, das grundsätzlich mit einem eindimensionalen Barcode, einem sog. EAN-Code auf der Verpackung versehen ist, damit das Produkt in seinem gesamten Vertriebsbereich von automatischen oder halbautomatischen Lesegeräten erfasst werden kann, wie sie bspw. an Supermarktkassen eingesetzt werden. Selbstverständlich kann es sich auch um ein offenes Produkt handeln; dieses hat dann i.d.R. eine mitgelieferte Karte mit dem zugehörigen eindimensionalen Barcode. Auf diese Weise ist eine eindeutige Unterscheidung anhand der unterschiedlichen Kodierungsarten ermöglicht: der eindimensionale Code kennzeichnet die Produkte; der zweidimensionale Barcode befindet sich am Fremdkörperdetektor und ein zweidimensionaler oder dreidimensionaler Barcode befindet sich am Probenkörper. Selbstverständlich kann das Codierungsprinzip ggf. auch abweichen. Für die vorliegende Applikation weist die beschriebene Art der Codezuordnung jedoch sehr große praktische Vorteile auf. Die Prüfperson kann dadurch keine Fehler machen, da kaum Fehlbedienungen möglich sind; bei unbeabsichtigten Fehlbedienungen würden sog. "unerlaubte" Codes zugewiesen werden, was aufgrund der eingesetzten Software als Bedienungsfehler erkannt werden kann. Weiter wird eine dritte Zuordnungskennzeichnung von dem Produkt im Rahmen der Funktionsüberprüfung der Fremdkörpererkennungseinrichtung von der Detektionseinheit erfasst. Beispielsweise kann das beanspruchte Verfahren derart sein, dass zunächst die erste Zuordnungskennzeichnung durch die Detektionseinheit vom Probenkörper abgelesen wird. Die zweite Zuordnungskennzeichnung kann vom Fremdkörperdetektionsgerät abgelesen und erfasst werden. Die dem Produkt zugeordnete Zuordnungskennzeichnung wird im vorliegenden Zusammenhang als dritte Zuordnungskennzeichnung bezeichnet. Weiterhin kann diese dritte Zuordnungskennzeichnung einem losen Produkt beiliegen. Hierbei kann es sich beispielsweise um Kennzeichnungskarten handeln, die immer produktbezogen einzusetzen sind.

Ist genau ein Probenkörper vor Durchführung des Verfahrens in einer Verpackungseinheit angeordnet, so kann diese die Fremdkörpererkennungseinrichtung einmal oder mehrfach durchlaufen. Grundsätzlich ist immer nur genau ein Probenkörper je Verpackungseinheit zu prüfen. Anschließend wäre ggf. ein weiterer Probenkörper zu prüfen, so dass wahlweise ein Durchgang durchlaufen werden kann. In aller Regel werden jedoch nacheinander mehrere Durchgänge mit gleichen oder jeweils unterschiedlichen Probenkörpern durchlaufen, bspw. 3-4 Durchgänge oder mehr. Auch kann in einer Ausführungsform der vorliegenden Erfindung die erste und/oder zweite Zuordnungskennzeichnung zuerst vom Produkt und nachfolgend von einem Probenkörper und/oder einer Fremdkörpererkennungseinrichtung erfasst werden. Hinsichtlich der Reihenfolge bzw. des Ablaufs der Verfahrensschritte steht dem Fachmann ein breites Spektrum zur Verfügung ohne den Schutzbereich der vorliegenden Erfindung zu verlassen. Die Standardreihenfolge sieht jedoch folgenden Ablauf vor: Fremdkörperdetektor scannen; Produkt scannen; Probenkörper scannen. Als Probenkörper können bspw. folgende Dimensionierungen sinnvoll eingesetzt werden, z.B. bei Kristallzucker: 1,0 mm Eisen; 1,5 mm Nichteisen; 2,0 mm Edelstahl und 2,3 mm V4A. Die Größenangaben in Millimetern bezeichnen die entsprechend dimensionierten Kugeln mit Durchmessern zwischen 1,0 und 2,3 mm.

Ferner kann die Detektionseinheit einen berührungsempfindlichen Bildschirm bzw. Touchscreen aufweisen. Über den berührungsempfindlichen Bildschirm bzw. Touchscreen kann mindestens eine Unterschrift oder eine sonstige Signatur erfasst werden. Beispielsweise kann das beanspruchte Verfahren durch eine Prüfperson durchgeführt werden. Weiter kann die Detektionseinheit derart beschaffen sein, dass sie selbständig oder in Wirkzusammenhang mit externen und ggf. computergestützten Vorrichtungen einen Prüfbericht erstellen kann. Die durch das Touchscreen der Detektionseinheit erfasste Unterschrift kann somit direkt in den Prüfbericht integriert werden.

In einer bevorzugten Ausführungsform der vorliegenden Erfindung ist die Fremdkörpererkennungseinrichtung als Metalldetektor ausgebildet. Auch Röntgendetektoren mit speziell darauf abgestimmten Testkörpern oder Ultraschallgeräte oder Wirbelstromgeräte o.dgl. sind möglich. Die Art der Prüfgeräte ist jedoch im vorliegenden Zusammenhang nicht für die Durchführbarkeit des erfindungsgemäßen Verfahrens von entscheidender Bedeutung, da es hier in erster Linie um das oben beschriebene Verfahren zur Überprüfung und/oder zur Validierung der Fremdkörperdetektion geht. Diese Überprüfung und/oder Validierung meint im vorliegenden Zusammenhang alle Testverfahren, die zur Überprüfung der Funktionstüchtigkeit, der Auflösung und/oder der Fehlerquote der eingesetzten Testgeräte dienen können. Grundsätzlich eignen sich als Fremdkörperdetektoren alle Arten von Detektoren wie bspw. Metall-, und Röntgendetektoren, jedoch auch Detektoren, die nach anderen Funktionsprinzipien arbeiten.

Die oben bereits erwähnte Zuordnungskennzeichnung kann beispielsweise als zweidimensionaler oder dreidimensionaler Code auf der Oberfläche des Probenkörpers über Lasergravur angebracht werden.

Die Detektionseinheit kann als mobile oder als stationäre Detektionseinheit ausgebildet sein. Beispielsweise kann die Detektionseinheit tragbar ausgebildet sein. Hierbei kann die Detektionseinheit einen oder mehrere Handgriffe zur einfachen Handhabung aufweisen. Ist die Detektionseinheit stationär ausgebildet, so kann auf die Erfassung der zweiten Zuordnungskennzeichnung unter Umständen verzichtet werden, da Daten über die Fremdkörpererkennungseinrichtung bereits fest hinterlegt sein können. Bei einer stationären Detektionseinheit kann beispielsweise einzig die erste Zuordnungskennzeichnung, mit anschließender optionaler Verifizierung der ersten Zuordnungskennzeichnung, erfasst werden. Ein solcher stationärer Scanner ist in aller Regel nur für eine Barcode-Erkennung vorbereitet und geeignet. Die dadurch erfassten Daten werden dann direkt zum Fremdkörperdetektor übertragen, so dass kein gesondertes Gerät mehr erforderlich ist. Es liegt somit eine integrierte Bauweise der beiden Geräte vor. So kann bspw. ein Zusatzmodul am Metalldetektor vorgesehen sein, das die Barcodes auf den Produkten und/oder auf den Prüfkörpern scannt, bevor diese den Fremdkörperdetektor durchlaufen. Wenn somit im formulierten unabhängigen Anspruch zum erfindungsgemäßen Verfahren die Rede davon ist, dass auf der Oberfläche des Probenkörpers eine erste Zuordnungskennzeichnung angebracht ist, die im Rahmen der Funktionsüberprüfung der Fremdkörpererkennungseinrichtung von einer Detektionseinheit erfasst wird, und dass diese Detektionseinheit einem Benutzer zugeordnet bzw. von diesem gehandhabt oder gesteuert wird, so ist mit dieser Formulierung gleichermaßen eine Bauvariante umfasst, bei der die Detektionseinheit mit dem Fremdkörpererkennungsgerät in baulicher oder funktionaler Einheit vereinigt ist. Bei dieser Gerätevariante sind alle Daten in der Fremdkörpererkennung hinterlegt; diese muss somit auch die Codes der Probenkörper lesen können. Bei dieser Variante kann der Handheld-Scanner ggf. komplett entfallen. Die Datenübertragung kann bspw. über eine USB-Schnittstelle erfolgen, so dass ggf. die komplette Protokollierung der Prüfdurchläufe im Metalldetektor gespeichert und von dort zu einem externen Rechner od. dgl. übertragen werden kann.

Vorzugsweise kann der Probenkörper oder Teile des Probenkörpers aus lebensmittelechtem Material gebildet sein. Hierzu zählen jegliche Materialien, die aufgrund ihrer physischen Zusammensetzung gesundheitlich unbedenklich sind. So eignen sich insbesondere die Kunststoffe PE oder PP oder hier bevorzugt POM wegen der guten Lebensmitteleignung (POM kommt vorwiegend aus dem medizinischen Bereich und verfügt dort über zahlreiche Zulassungen) zur Ausgestaltung der Probenkörper oder von Teilen der Probenkörper. Besonders vorteilhaft ist es, wenn der Probenkörper aus blauem Material gefertigt ist, da sich diese Farbe in nahezu allen Trägermaterialien, insbesondere in Lebensmitteln problemlos erkennen und identifizieren lässt, da die Farbe blau in natürlichen Lebensmitteln praktisch nicht vorkommt. Diese Tatsache lässt den Probenkörper bereits mit bloßem Auge als Fremdkörper erkennen.

Es sei an dieser Stelle betont, dass das in der o.g. Beschreibung durchgängig als metallhaltiges Element bezeichnete Element grundsätzlich auch aus anderem Material gebildet sein kann. So kann es bspw. für Röntgenanwendungen sinnvoll sein, Glas oder Keramik als Fremdkörpermaterial zu verwenden. So können bspw. Glaskugeln oder Keramikkugeln eingesetzt werden, um damit z.B. in Gläsern verpackte Produkte überprüfen zu können. Solche Glaskugeln können bspw. Abplatzungen oder Glassplitter simulieren und in einer Röntgenprüfung erkennbar machen. Wesentlich für die Erfindung ist die Möglichkeit, durch die Probenkörper potenzielle Fremdkörper aller Art und der verschiedensten Materialien nachzubilden, vorzugsweise abgestimmt auf das jeweils typischerweise verwendete Verpackungsmaterial.

Im Folgenden sollen Ausführungsbeispiele die Erfindung und ihre Vorteile anhand der beigefügten Figuren näher erläutern.
Fig. 1 zeigt ein Flussdiagramm mit zeitlich aufeinanderfolgenden Schritten einer Ausführungsform eines Verfahrens der vorliegenden Erfindung.
Fig. 2a zeigt ein Flussdiagramm mit einer im Hinblick auf die Fig. 1 unterschiedlichen Reihenfolge des zeitlichen Ablaufs der aufeinander folgenden Schritte einer Ausführungsform eines Verfahrens der vorliegenden Erfindung;
Fig. 2b zeigt ein weiteres Flussdiagramm mit einer alternativen Reihenfolge des zeitlichen Ablaufs der aufeinander folgenden Schritte.
Fig. 3 zeigt in mehreren Perspektivansichten insgesamt acht unterschiedliche Ausführungsvarianten eines Probenkörpers zur Verwendung in einem Verfahren entsprechend der vorliegenden Erfindung.
Fig. 4 zeigt eine Perspektivansicht einer Ausführungsform einer Fremdkörpererkennungseinrichtung der vorliegenden Erfindung.
Fig. 5 zeigt eine Perspektivansicht einer Ausführungsform einer Detektionseinheit, wie sie in dem Verfahren der vorliegenden Erfindung Verwendung finden kann.
Fig. 6 zeigt eine schematische Ansicht mit den Schritten einer Ausführungsform eines Verfahrens der vorliegenden Erfindung.
Fig. 7 zeigt eine weitere schematische Ansicht mit den Schritten einer Ausführungsform eines Verfahrens der vorliegenden Erfindung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

Im Zusammenhang mit der Durchführung des Verfahrens werden verschiedene Zuordnungskennzeichnungen 5, 6 und 8 gelesen und verarbeitet, wobei die erste Zuordnungskennzeichnung mit der Bezugsziffer 5, die zweite Zuordnungskennzeichnung mit der Bezugsziffer 6 und die dritte Zuordnungskennzeichnung mit der Bezugsziffer 8 bezeichnet ist. Die erste Zuordnungskennzeichnung 5 befindet sich auf einem Prüfkörper 7. Die zweite Zuordnungskennzeichnung 6 ist außen in lesbarer Form an einer Fremdkörpererkennungseinrichtung 11 angebracht. Die dritte Zuordnungskennzeichnung 8 kann sich wahlweise auf der Verpackung eines Produkts 13 oder auf einer Produktkarte 14 befinden, die bspw. einem in loser Form vorliegenden Produkt beiliegen kann.

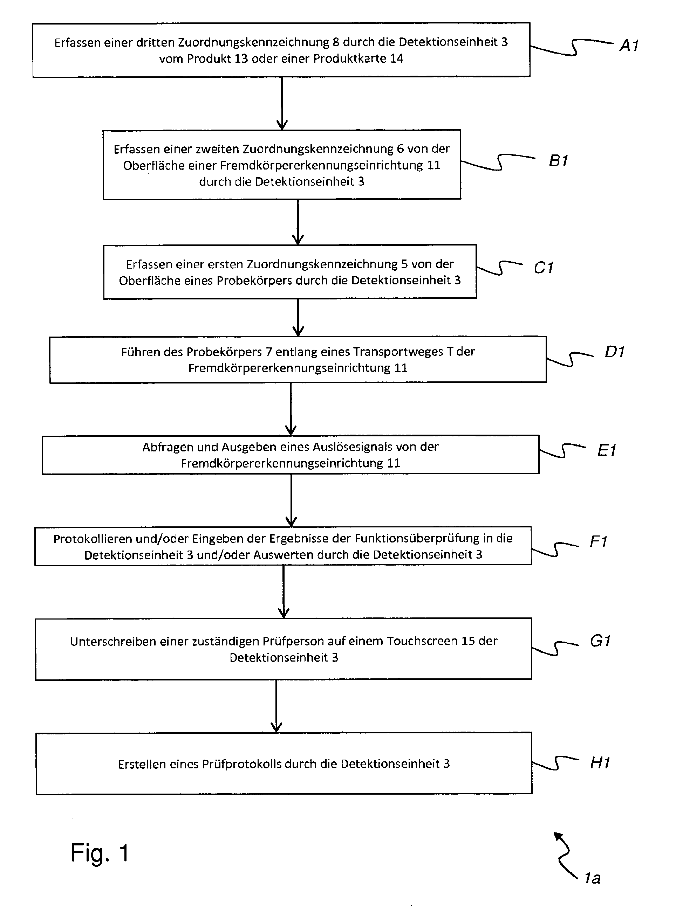

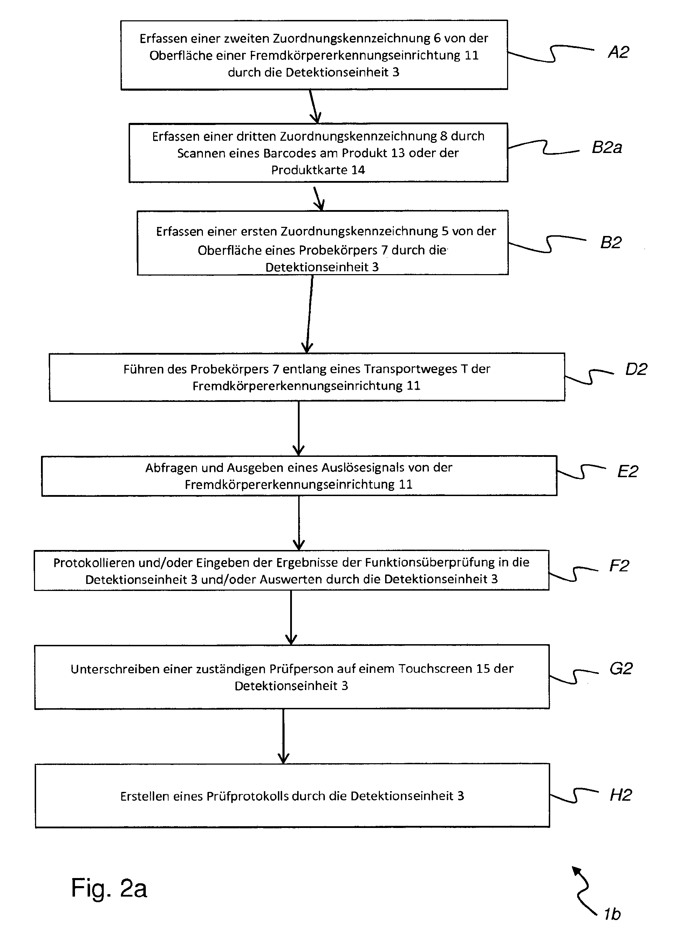

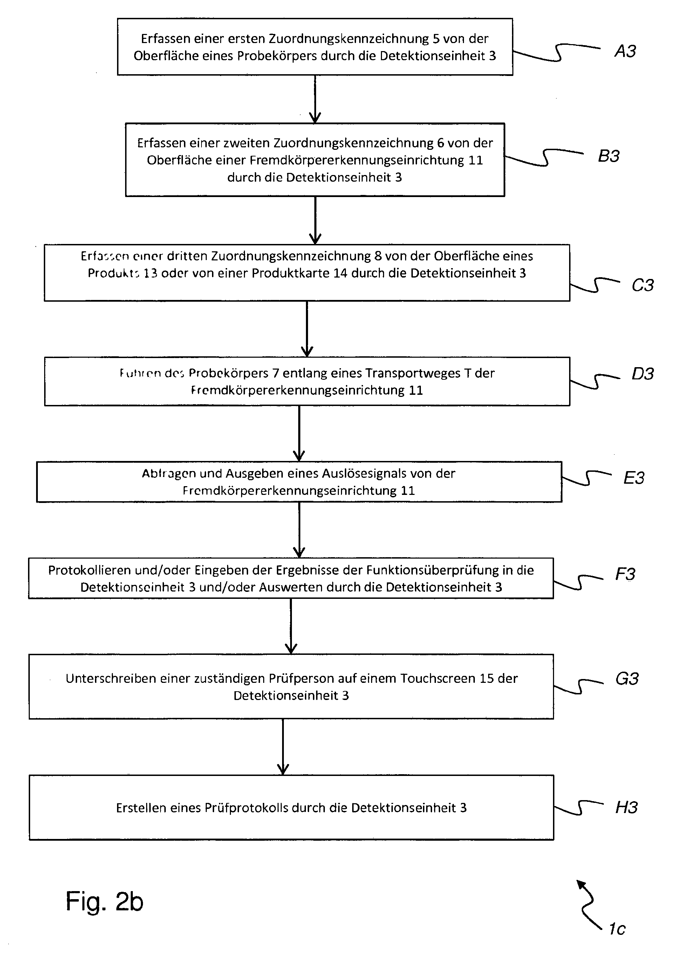

Die Darstellung der Fig. 1 zeigt ein Flussdiagramm 1 - hier bezeichnet mit 1a - mit zeitlich aufeinander folgenden Schritten einer Ausführungsform eines Verfahrens entsprechend der vorliegenden Erfindung. In einem ersten Verfahrensschritt A1 wird zunächst eine dritte Zuordnungskennzeichnung 8 von einer Detektionseinheit 3 erfasst. Diese dritte Zuordnungskennzeichnung 8 ist einem Produkt 13 zugeordnet und kann wahlweise außen auf einer Produktverpackung oder auf einer dem lose vorliegenden Produkt beiliegenden Produktkarte 14 angeordnet, insbesondere aufgedruckt oder aufgeklebt sein. Im hierauf folgenden Verfahrensschritt B1 erfolgt die Erfassung der zweiten Zuordnungskennzeichnung 6 von der Oberfläche einer Fremdkörpererkennungseinrichtung 11 durch die Detektionseinheit 3. Diese zweite Zuordnungskennzeichnung 6 kann bspw. als Aufkleber oder als sonstige Markierung außen an einer lesbaren Stelle am Gehäuse der Fremdkörpererkennungseinrichtung 11 angebracht sein. Die erste Zuordnungskennzeichnung 5 wird im Verfahrensschritt C1, welcher bei dieser Variante des Verfahrens gemäß Fig. 1 zeitlich nach dem Verfahrensschritt B1 stattfindet, aber in anderen Ausführungsformen auch beispielsweise vor dem Verfahrensschritt B1 und/oder dem Verfahrensschritt A1 stattfinden kann (vgl. Fig. 2a und Fig. 2b), von der Oberfläche eines Probenkörpers 7 durch die Detektionseinheit 3 erfasst.

In einem weiteren Verfahrensschritt D1 wird nun der Probenkörper 7 entlang eines Transportweges T der Fremdkörpererkennungseinrichtung 11 geführt. Hierauf wird in einem weiteren Verfahrensschritt E1 bei ordnungsgemäßer Erkennung des Probenkörpers 7 als metallhaltiger Fremdkörper ein Auslösesignal von der Fremdkörpererkennungseinrichtung 11 erzeugt und ausgegeben. Das Auslösesignal kann ggf. Informationen über die Erkennung des Probenkörpers 7 enthalten, wird normalerweise jedoch von der prüfenden Person abgefragt. Im Verfahrensschritt F1 werden nun die Ergebnisse der Funktionsüberprüfung durch die Detektionseinheit 3 ausgewertet. Die Auswertung kann beispielsweise Angaben über die verwendeten Probenkörper 7 und/oder Angaben über die Fremdkörpererkennungseinrichtung 11 und/oder weitere Daten, wie beispielsweise das Datum, an dem das Verfahren durchgeführt wurde, und/oder die entsprechende Uhrzeit beinhalten. Weiter wird im Verfahrensschritt G1 die Unterschrift oder eine sonstige Signatur einer zuständigen Prüferperson über ein Touchscreen 15 (berührungsempfindlicher Bildschirm) oder wahlweise eine andere geeignete Erfassungseinrichtung (bspw. ein Fingerabdrucksensor o. dgl.) der Detektionseinheit 3 erfasst. Die Unterschrift bzw. die Authentifizierung sowie die Ergebnisse der Auswertung der Funktionsüberprüfung können im Verfahrensschritt H1 zur Erstellung eines Prüfprotokolls durch die Detektionseinheit 3 dienen. Im Hinblick auf die aufgeführten Verfahrensschritte A1-H1 sind einige als optional zu verstehen. Weiter ist die dargestellte Reihenfolge nicht zwingend nötig. Vielmehr können ein-oder mehrere Verfahrensschritte im Rahmen der vorliegenden Erfindung vertauscht werden, wie dies anhand der nachfolgend erläuterten Figuren 2a und 2b verdeutlicht werden wird.

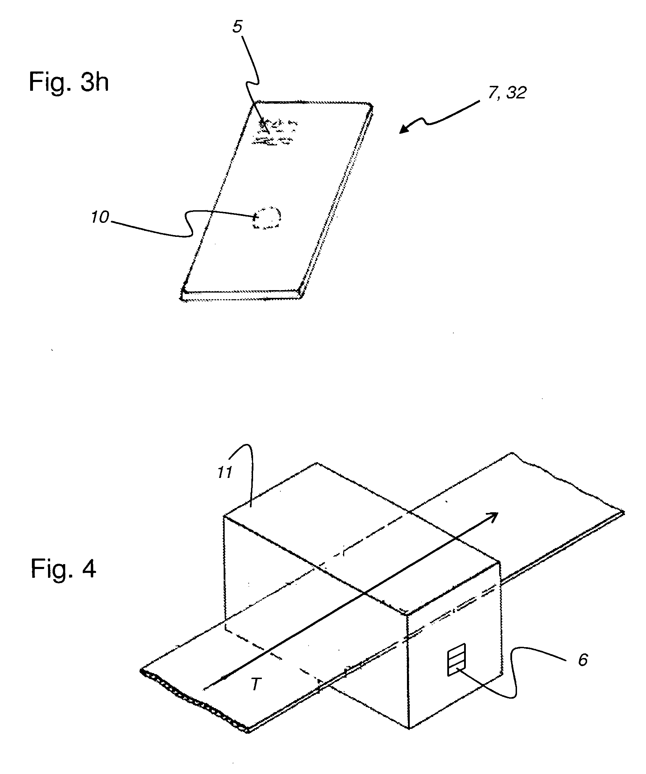

Die beiden Darstellungen der Fig. 2a und der Fig. 2b zeigen jeweils in Flussdiagrammen 1 b und 1 c Varianten eines Verfahrens mit einer im Hinblick auf die Fig. 1 unterschiedlichen Reihenfolge des zeitlichen Ablaufs der aufeinanderfolgenden Schritte einer Ausführungsform eines Verfahrens der vorliegenden Erfindung. So wird entsprechend Fig. 2a in einem ersten Verfahrensschritt A2 mittels der Detektionseinheit 3 (siehe hierzu Fig. 4) die zweite Zuordnungskennzeichnung 6 von einer geeigneten Oberfläche der Fremdkörpererfassungseinrichtung 11 erfasst. Beispielsweise kann die zweite Zuordnungskennzeichnung 6 als zweidimensionaler Code ausgebildet sein und die Detektionseinheit 3 eine geeignete Scaneinrichtung 9 für solche zweidimensionale Codes beinhalten. Mittels der Scaneinrichtung 9 kann in einem weiteren Verfahrensschritt B2a die dritte Kennzeichnung 8 in Form eines Barcodes am Produkt 13 erfasst werden. Anschließend wird die erste Zuordnungskennzeichnung 5 von der Oberfläche des Probenköpers 7 gelesen. Um Fehler beim Erfassen der ersten, zweiten und/oder dritten Zuordnungskennzeichnung 5, 6 und/oder 8 durch die Detektionseinheit 3 während der Verfahrensschritte A und B zu vermeiden, kann wahlweise in einem weiteren Verfahrensschritt die Verifizierung der ersten und/oder zweiten Zuordnungskennzeichnung 5 und/oder 6 sowie der dritten Zuordnungskennzeichnung 8 erfolgen. Dieser Schritt kann jedoch auch entfallen, so wie dies in Fig. 2a auch der Fall ist.

Die erste und/oder zweite Zuordnungskennzeichnung 5 und 6 können in einer zweidimensionalen Ausgestaltung vorliegen. Beispielsweise kann die erste Zuordnungskennzeichnung 5 auf dem Probenkörper 7 als zweidimensionales Gebilde vorhanden sein. Die Verfahrensschritte D2 bis H2 sind entsprechend den Verfahrensschritten D1 bis H1 aus Fig. 1 ausgebildet. In weiteren Ausführungsformen können im Rahmen des vorliegenden Verfahrens beispielsweise zuerst die Verfahrensschritte D1-G1 bzw. D2-G2 ausgeführt werden und hierauf die Verfahrensschritte A1-C1 bzw. A2-C2.

Alternativ hierzu kann entsprechend Fig. 2b in einem ersten Verfahrensschritt A3 mittels der Detektionseinheit 3 (siehe hierzu Fig. 4) die erste Zuordnungskennzeichnung 5 von der Oberfläche des Probenkörpers 7 erfasst werden. Es sei an dieser Stelle darauf hingewiesen, dass es sich bei der Darstellung gemäß Fig. 2b um die häufigste und gemäß der vorliegenden Erfindung bevorzugte Variante der Verfahrensfolge handelt. Mittels der Scaneinrichtung 9 kann in einem weiteren Verfahrensschritt B3 die zweite Kennzeichnung 6 von der Einrichtung 11 erfasst werden. Anschließend wird im Schritt C3 die dritte Zuordnungskennzeichnung 8 vom Produkt 13 oder der Produktkarte 14 gelesen. Weiterhin wird im Schritt D3 der Probenkörper entlang des Transportweges T durch die Fremdkörpererkennungseinrichtung 11 geleitet, um von dort ein Auslösesignal zu erhalten (Schritt E3). Die weiteren Verfahrensschritte F3, G3 und H3 unterscheiden sich nicht von den entsprechenden Schritten gemäß Fig. 1 und Fig. 2a.

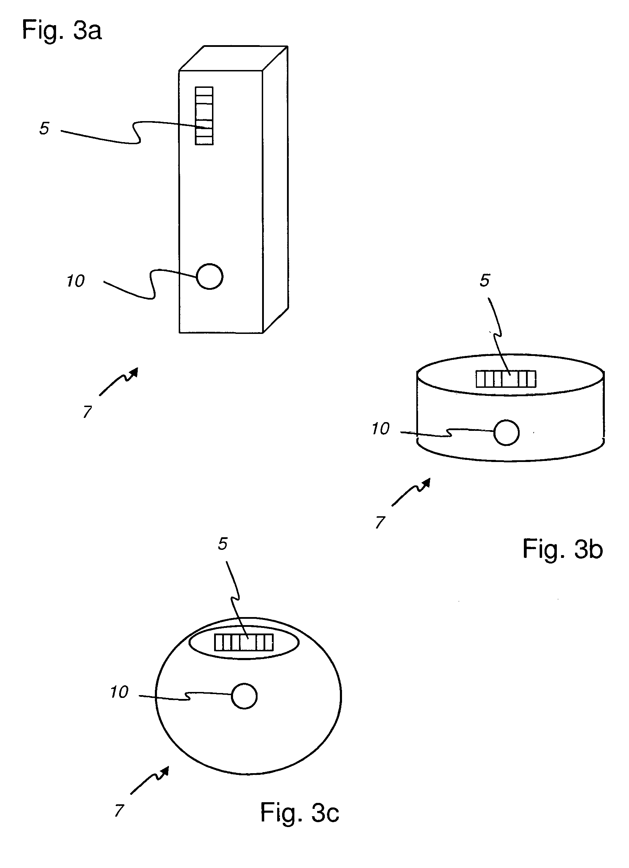

Die Darstellung der Fig. 3a zeigt eine Perspektivansicht eines quaderförmigen Probenkörpers 7 zur Verwendung bei einem Verfahren gemäß der vorliegenden Erfindung. Der Probenkörper 7 ist in der gezeigten Ausführungsform aus lebensmittelechtem Material gebildet und weist ein kugelförmiges oder wahlweise anders geformtes Element 10 auf, welches aus Metall oder einem anderen identifizierbaren Material wie bspw. Glas, Keramik o. dgl. besteht. Auf der Oberfläche des Probenkörpers 7 ist eine erste Zuordnungskennzeichnung 5 angebracht. Die Fig. 3b zeigt eine bevorzugte zweite Variante des Probenkörpers 7, der eine flachzylindrische Kontur aufweist. Die Farbe des Probenkörpers 7 ist vorzugsweise blau oder eine andere auffällige Farbe, da diese Farbe bei der Verwendung zur Fremdkörpererkennung in Lebensmitteln besonders gut aufgrund des Nichtvorkommens bei natürlichen Lebensmitteln geeignet ist. Besonders bevorzugt als Probenkörper ist die in Fig. 3c geigte Kugelform des Probenkörpers 7, der zur Aufbringung der Zuordnungskennzeichnung 5 ggf. oder optional eine leicht abgeflachte Stelle aufweisen kann, wie dies in Fig. 3c in schematischer Weise angedeutet ist. Die Einlagen 10 aus metallhaltigem Material, insbesondere aus reinem Metall wie Eisen, Leichtmetall oder Edelstahl sind vorzugsweise rund. Insbesondere können sich aus Kugeln gebildet sein, die bspw. in Wälzlagern eingesetzt werden. Darüber hinaus können die Einlagen 10 auch bspw. aus Glas, Keramik oder einem anderen typischen Verpackungsmaterial oder Fremdkörpermaterial bestehen, die bspw. durch Beschädigungen der Verpackungen oder durch unbeabsichtigten Eintrag von Maschinen oder Mitarbeitern auftreten können.

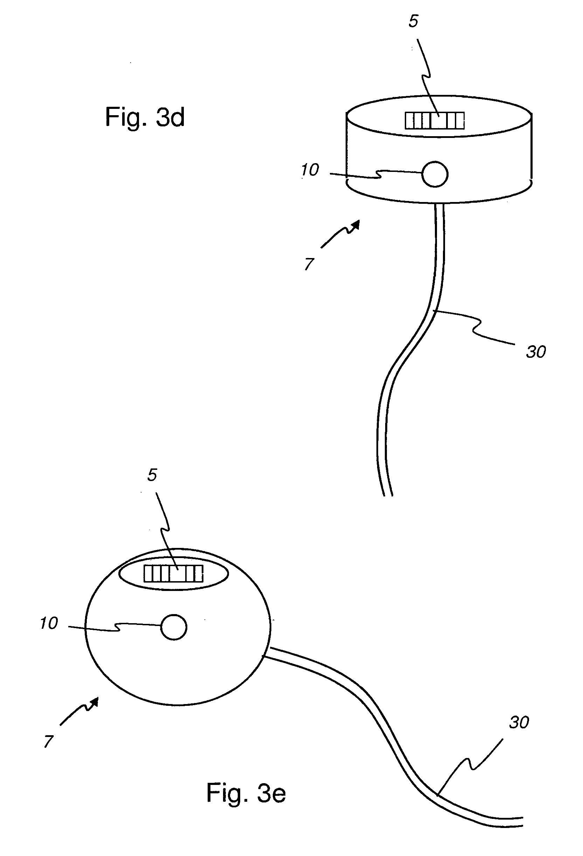

Die Darstellung der Fig. 3d zeigt eine weitere alternative Ausführungsvariante eines scheibenförmigen oder zylindrischen Probenkörpers 7, der mit einem flexiblen Abschnitt 30 wie einer Schnur o. dgl. verbunden ist. Im Übrigen entspricht der Probenkörper 7 der in Fig. 3b gezeigten zylindrischen Variante. Allerdings können wahlweise auch alle anderen Probenkörper 7, bspw. solche wie in Fig. 3a und Fig. 3c, zusätzlich mit einem flexiblen Abschnitt 30 versehen sein. Die Darstellung der Fig. 3e zeigt bspw. eine Variante des Probenkörpers 7 in Kugelform, der bis auf den zusätzlichen flexiblen Abschnitt 30 der in Fig. 3c gezeigten Variante entspricht. Eine solche Schnur bzw. ein solcher flexibler Abschnitt 30 kann aus der zu untersuchenden Probe herausragen und erleichtert das spätere Auffinden und Herausziehen des Probenkörpers 7 aus der Probe. Generell gilt für alle der in den Figuren 3a bis 3e gezeigten Varianten der Probenkörper 7, dass diese wahlweise auch aus flexiblen Materialen gefertigt sein können. Das zu detektierende Element 10 ist bei allen Varianten gemäß Fig. 3a bis Fig. 3e im Probenkörper 7 eingebettet und von diesem umhüllt.

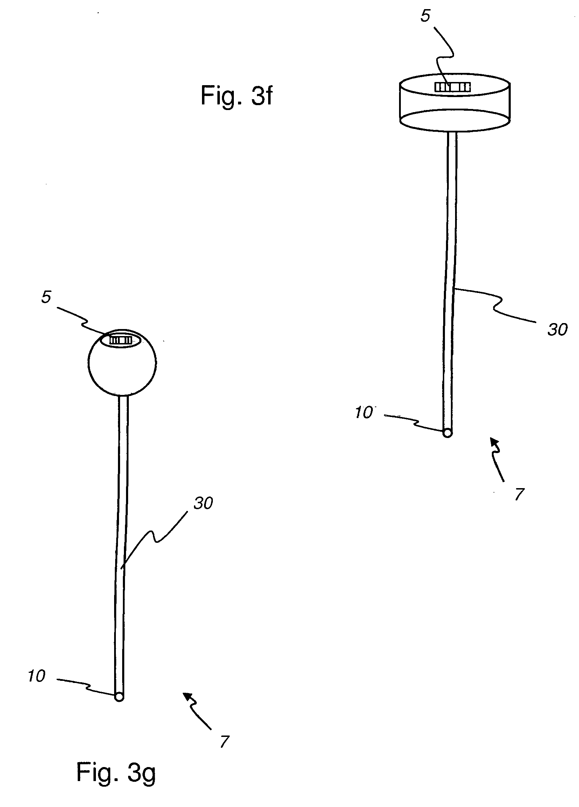

Die Darstellung der Fig. 3f zeigt eine weitere alternative Ausführungsvariante eines scheibenförmigen oder zylindrischen Probenkörpers 7, der mit einem geraden, rohrförmigen oder aus Vollmaterial bestehenden flexiblen und gegenüber seiner Länge relativ dünnen Abschnitt 30 verbunden ist. An dem freien Ende des flexiblen Abschnittes 30, das nicht mit dem Probenkörper 7 verbunden ist, befindet sich das zu detektierende Element 10. Bei Verwendung eines rohrförmigen flexiblen Abschnittes 30 kann das zu detektierende Element 10 dort eingefügt und das offene Ende des Abschnittes 30 durch einen Verschlussdeckel, einen Klebepunkt o. dgl. verschlossen sein. Im Übrigen kann der Probenkörper 7 den zuvor gezeigten Varianten entsprechen, wobei die Größe je nach Bedarf differieren kann. Der Probenkörper 7 sollte zumindest so groß sein, dass die Zuordnungskennzeichnung 5 problemlos Platz findet. Allerdings können wahlweise auch alle anderen Probenkörper 7, bspw. solche wie in Fig. 3a und Fig. 3c, zusätzlich mit einem flexiblen Abschnitt 30 versehen sein. Die Darstellung der Fig. 3g zeigt bspw. eine Variante des Probenkörpers 7 in Kugelform, der ansonsten der in Fig. 3f gezeigten Variante entspricht. Ein solcher Probenkörper 7 mit einem am Ende eines flexiblen Abschnittes 30 befindlichen zu detektierenden Element 10 kann einer zu überprüfenden Stoff-, Substanz- oder Lebensmittelprobe lose beigelegt werden und muss dort nicht unbedingt eingetaucht sein. Generell gilt für alle der in den Figuren 3f bis 3h gezeigten Varianten der Probenkörper 7, dass diese wahlweise auch aus flexiblen Materialen gefertigt sein können.

Die perspektivische Darstellung der Fig. 3h zeigt einen Probenkörper in Kartenform 32, der bspw. aus Kunststoff ausgebildet und gefertigt sein kann. Die Einlage 10 kann bspw. in eine Vertiefung eingebracht sein, die zuvor durch einen Tiefziehvorgang in den Probenkörper in Kartenform 32 eingebracht wurde. Die Einlage 10 kann wiederum durch einen nahezu beliebigen Fremdkörper gebildet sein, der metallisch oder nichtmetallisch, bspw. Glas oder Keramik o. dgl. sein kann. Eine solche Variante mit dem kartenförmigen Probenkörper 32 muss nicht notwendigerweise aus lebensmittelechtem Material gefertigt sein, da sie auch für verpackte Produkte vorteilhaft eingesetzt werden kann. Die Zuordnungskennzeichnung 5 kann an geeigneter Stelle an einer Oberfläche des kartenförmigen Probenkörpers 32 aufgebracht sein.

Die Darstellung der Fig. 4 zeigt eine Perspektivansicht einer ersten Ausführungsvariante einer Fremdkörpererkennungseinrichtung 11 der vorliegenden Erfindung. Auf der Oberfläche der Fremdkörpererkennungseinrichtung 11 ist eine zweite Zuordnungskennzeichnung 6 angebracht, deren Codierung mittels der Detektionseinheit 3 erfasst, gelesen und gespeichert werden kann. Dargestellt ist zudem der Transportweg T, auf dem sich Produkte 13 während des Passierens des Erfassungsbereiches der Fremdkörpererkennungseinrichtung 11 befinden und bewegen können. Auf dem Transportweg T befindet sich während des Verfahrens zudem der Probenkörper 7, da dieser vorzugsweise direkt dem Produkt 13 zugeordnet ist, bspw. durch Auflegen oder Einlegen auf bzw. in das Produkt.

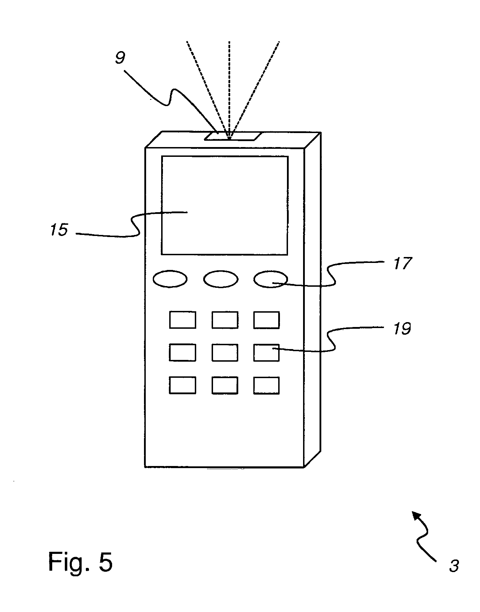

Die Fig. 5 zeigt eine Perspektivansicht einer Ausführungsform einer Detektionseinheit 3, wie sie in dem Verfahren der vorliegenden Erfindung Verwendung finden kann. Die Detektionseinheit 3 beinhaltet eine Scaneinrichtung 9 zum Erfassen der ersten und zweiten Zuordnungskennzeichnung 5 und 6 sowie zur Erfassung der dritten Zuordnungskennzeichnung 8. Die Scaneinrichtung 9 kann insbesondere durch einen optischen Sensor, bspw. einen Zeilensensor oder eine CCD-Zelle o. dgl. gebildet sein. Weiter kann die Detektionseinheit 3 drei Auswahltasten 17 oder eine andere geeignete Steuereinrichtung zur manuellen Eingabe bzw. Steuerung aufweisen, um die Handhabung der auf der Detektionseinheit 3 abgelegten Software zu erleichtern. Zur Dateneingabe können Eingabetasten 19 vorgesehen sein. Zudem ist ein Display 15 vorhanden, welches in der gezeigten Ausführungsform als Touchscreen bzw. als berührungsempfindlicher Bildschirm o. dgl. ausgebildet sein kann. Wesentlich für die Durchführbarkeit des erfindungsgemäßen Verfahrens ist die Eignung der Scaneinrichtung 9 für den vorgesehen Zweck, weshalb sie mit einer geeigneten Software auszustatten ist. Grundsätzlich kann diese Software jedoch auf verschiedene Scanner portiert werden, so dass unterschiedliche Geräte und Gerätearten eingesetzt werden können.

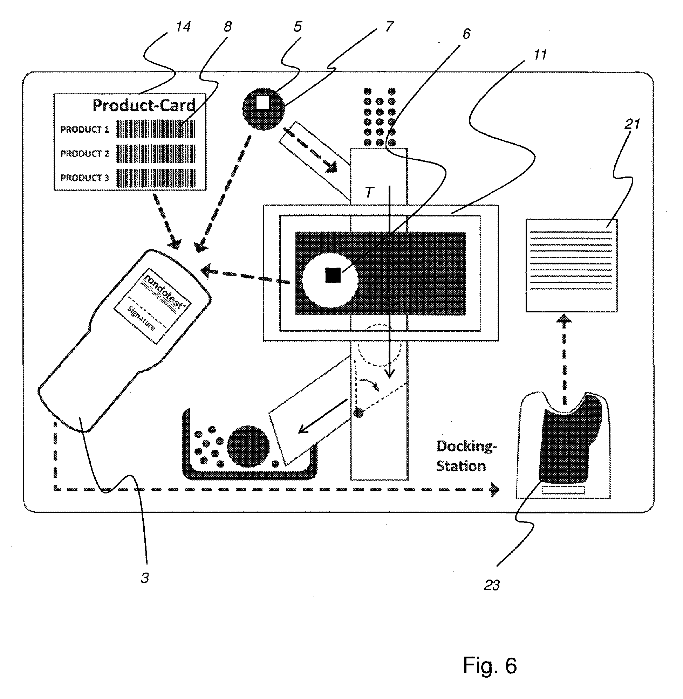

Die Fig. 6 zeigt eine schematische Ansicht zur Verdeutlichung der Schritte einer Ausführungsform eines Verfahrens der vorliegenden Erfindung. Mittels der Detektionseinheit 3 wird eine erste Zuordnungskennzeichnung 5 vom Probenkörper 7 abgelesen. Die erste Zuordnungskennzeichnung 5 ist auf dem Probenkörper 7 als zweidimensionales Gebilde über Lasergravur angebracht. Ferner wird eine zweite Zuordnungskennzeichnung 6, angebracht auf der Fremdkörpererkennungseinrichtung 11, von der Detektionseinheit 3, erfasst. Zudem erfolgt eine Erfassung der dritten Zuordnungskennzeichnung 8, die auf dem Produkt oder auf der Produktkarte 14 angebracht ist. Diese dritte Zuordnungskennzeichnung 8 ist auf dem Produkt 13 oder der Produktkarte 14 typischerweise als Barcode angebracht. Die Erfassung der ersten, zweiten und dritten Zuordnungskennzeichnung 5, 6 und 8 vom Probenkörper 7, dem Produkt 13 bzw. der Produktkarte 14 und dem Fremdkörpererkennungseinrichtung 11 können hinsichtlich ihrer Reihenfolge variieren. Anschließend wird der Probenkörper 7 entlang des Transportweges T zur Erzeugung eines Antwortsignals bzw. eines Auslösesignals durch die Fremdkörpererkennungseinrichtung 11 geführt. Hierauf folgend wird die Detektionseinheit 3 in der Auswerteeinheit 23 zum Erzeugen einer Dokumentation 21 angeordnet. In der Praxis kann bspw. eine USB-Ladestation oder Dockingstation zum Einsatz kommen. Die Detektionseinheit 3 mit der daran befindlichen Scaneinheit 9 kann dort eingesteckt und geladen werden. Auch ist damit ggf. eine Datenübertragung zu einem Rechner ermöglicht, was jedoch auch mittels WLAN oder Bluetooth erfolgen kann. Darüber hinaus gibt es ggf. weitere Varianten zum Übertragen des Prüfberichts in einen stationären Rechner.

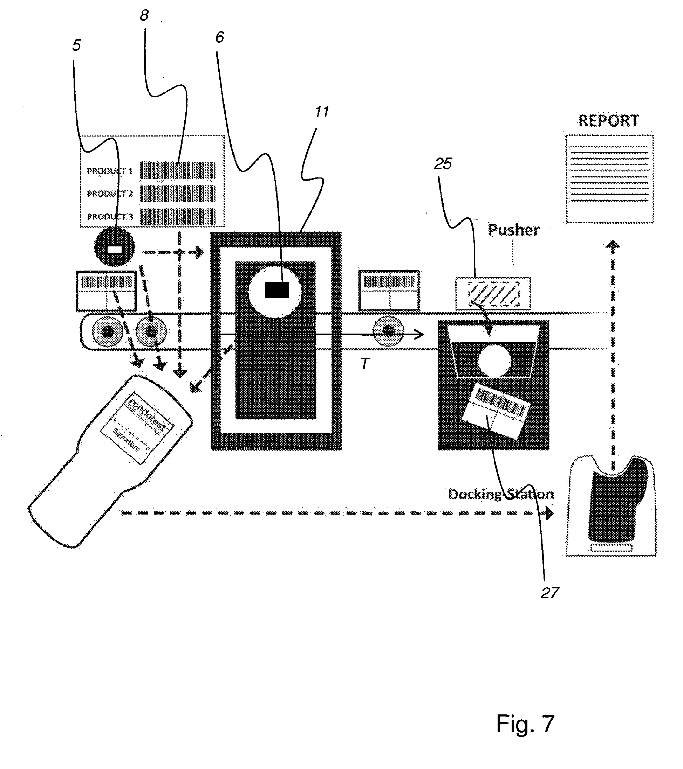

Die Fig. 7 zeigt eine weitere schematische Ansicht mit den Schritten einer Ausführungsform eines Verfahrens der vorliegenden Erfindung. In der in Fig. 7 gezeigten Ausführungsform ist eine Selektionseinheit 25 in Gestalt eines sog. Pushers zum Ausschieben von Produkten 13 und/oder von Probenkörpern 7 vom Transportweg T vorhanden. Das Erfassen der ersten und/oder zweiten sowie der dritten Zuordnungskennzeichnung 5 und/oder 6 und 8 erfolgt analog zu der in Fig. 6 beschriebenen Ausführungsform des Verfahrens. Nachdem der Probenkörper 7 den Erfassungsbereich der Fremdkörpererkennungseinrichtung 11 passiert hat, wird von dieser ein Antwort- oder Auslösesignal ausgegeben. Wurde der Probenkörper 7 von der Fremdkörpererkennungseinrichtung 11 eindeutig identifiziert, so kann er vom Transportweg T durch die Selektionseinheit 25 entfernt und seitlich ausgeschoben werden, ggf. mitsamt dem Produkt 13 bzw. dem verpackten Produkt 27. Wie in Fig. 7 zu erkennen, kann der Probenkörper 7 im Rahmen des beanspruchten Verfahrens auch in Verpackungseinheiten 27 angeordnet sein. Hier soll das Produkt selbst gemeint und dargestellt sein; d.h. der Testkörper 7 wird auf das Produkt selbst gelegt; nach Erkennung wird Produkt mit Testkörper 7 ausgeschieden und landet in einem geeigneten Auffangbehälter.

Es sei abschließend nochmals betont, dass das in der o.g. Beschreibung meist als metallhaltiges Element bezeichnete Element 10 grundsätzlich auch aus anderem Material gebildet sein kann. So kann es bspw. für Röntgenanwendungen sinnvoll sein, Glas oder Keramik als Fremdkörpermaterial zu verwenden. So können bspw. Glaskugeln oder Keramikkugeln eingesetzt werden, um damit z.B. in Gläsern verpackte Produkte überprüfen zu können. Solche Glaskugeln können bspw. Abplatzungen oder Glassplitter simulieren und in einer Röntgenprüfung erkennbar machen.

Ein wesentlicher und wichtiger Aspekt für die Erfindung ist die Möglichkeit, durch die Probenkörper 7 potenzielle Fremdkörper aller Art und der verschiedensten Materialien nachzubilden, vorzugsweise abgestimmt auf das jeweils typischerweise verwendete Verpackungsmaterial.

### Bezugszeichenliste:

- 1a: Flussdiagramm
- 1b, 1c: Flussdiagramm
- 3: Detektionseinheit
- 5: erste Zuordnungskennzeichnung
- 6: zweite Zuordnungskennzeichnung
- 7: Probenkörper
- 8: dritte Zuordnungskennzeichnung
- 9: Scaneinrichtung
- 10: metallisches/nichtmetallisches Element (zu detektierendes Element)
- 11: Fremdkörpererkennungseinrichtung
- 13: Produkt
- 14: Produktkarte
- 15: Touchscreen, berührungsempfindlicher Bildschirm
- 17: Auswahltasten
- 19: Eingabetasten
- 21: Dokumentation
- 23: Auswerteeinheit
- 25: Selektionseinheit
- 27: verpacktes Produkt
- 30: flexibler Abschnitt
- 32: Probenkörper in Kartenform

- A1-H1: Verfahrensschritte
- A2-H2: Verfahrensschritte
- T: Transportweg

## Patentansprüche

1. Verfahren zur Kalibrierung, Validierung und/oder Funktionsüberprüfung einer Fremdkörpererkennungseinrichtung (11) bei der Förderung von Lebensmitteln, Arzneimitteln oder anderen verpackten oder losen Produkten (13, 27), unter Einsatz wenigstens eines Probenkörpers (7), der durch einen Erfassungsbereich der Fremdkörpererkennungseinrichtung (11) entlang eines Transportweges (T) zur Erzeugung eines Antwortsignals oder Auslösesignals geführt wird, wobei der Probenkörper (7) zumindest teilweise aus zu detektierendem Material gebildet ist und/oder ein zu detektierendes Element (10) enthält und wobei auf der Oberfläche des Probenkörpers (7) eine erste Zuordnungskennzeichnung (5) angebracht ist und die erste Zuordnungskennzeichnung (5) im Rahmen der Funktionsüberprüfung der Fremdkörpererkennungseinrichtung (11) von einer Detektionseinheit (3) erfasst wird, die einem Benutzer zugeordnet bzw. von diesem gehandhabt oder gesteuert wird, **dadurch gekennzeichnet, dass** die Detektionseinheit (3) einen berührungsempfindlichen Bildschirm bzw. Touchscreen (15) aufweist und über diesen Bildschirm bzw. Touchscreen (15) mindestens eine manuelle Signatur und/oder Unterschrift im Rahmen der Funktionsüberprüfung der Fremdkörpererkennungseinrichtung (11) erfasst wird.

2. Verfahren nach Anspruch 1, bei dem der Probenkörper (7) zumindest teilweise aus metallischem oder metallhaltigem Material gebildet ist und/oder ein metallisches oder metallhaltiges Element (10) enthält.

3. Verfahren nach Anspruch 1, bei dem der Probenkörper (7) zumindest teilweise aus nichtmetallischem Material wie Glas, Keramik o. dgl. gebildet ist und/oder ein nichtmetallisches Element (10) enthält.

4. Verfahren nach einem der Ansprüche 1 bis 3, bei dem eine zweite Zuordnungskennzeichnung (6) für die Fremdkörpererkennungseinrichtung (11) vorhanden ist und dieser zugeordnet ist und im Rahmen der Funktionsüberprüfung der Fremdkörpererkennungseinrichtung (11) von der Detektionseinheit (3) erfasst wird.

5. Verfahren nach einem der Ansprüche 1 bis 4, bei dem eine dritte Zuordnungskennzeichnung (8) für die Produkte (13) vorhanden ist und die dritte Zuordnungskennzeichnung (8) dem verpackten oder losen Produkt (13, 27) zugeordnet ist und im Rahmen der Funktionsüberprüfung der Fremdkörpererkennungseinrichtung (11) von der Detektionseinheit (3) erfasst wird.

6. Verfahren nach einem der Ansprüche 1 bis 5, bei dem die erste Zuordnungskennzeichnung (5) als zweidimensionale Codierung auf der Oberfläche des Probenkörpers (7) mittels Lasergravur angebracht ist bzw. wird.

7. Verfahren nach Anspruch 5, bei dem die dritte Zuordnungskennzeichnung (8) als Barcode oder EAN-Code dem Produkt (13) zugeordnet bzw. über eine Produktkarte (14) dem Produkt (13) beigelegt wird.

8. Verfahren nach einem der Ansprüche 1 bis 7, bei dem die Fremdkörpererkennungseinrichtung (11) durch einen Metalldetektor oder Röntgendetektor gebildet wird und die Detektionseinheit (3) durch eine mobile oder stationäre Detektionseinheit gebildet wird.

9. Verfahren nach Anspruch 8, bei dem die stationäre Detektionseinheit (3) baulich und/oder konstruktiv der Fremdkörpererkennungseinrichtung (11) zugeordnet bzw. in dieser integriert ist.

10. Verfahren nach einem oder mehreren der Ansprüche 1 bis 9, bei welchem die Detektionseinheit (3) selbständig oder in Wirkzusammenhang mit externen Vorrichtungen einen Prüfbericht erstellt.

11. System zur Kalibrierung, Validierung und/oder Funktionsüberprüfung einer Fremdkörpererkennungseinrichtung (11) bei der Förderung von Lebensmitteln, Arzneimitteln oder anderen losen oder verpackten Produkten (13, 27), mit einer Detektionseinheit und wenigstens einem Probenkörper (7), der durch einen Erfassungsbereich der Fremdkörpererkennungseinrichtung (11) entlang eines Transportweges (T) zur Erzeugung eines Auslösesignals der Fremdkörpererkennungseinrichtung (11) förderbar ist, wobei der Probenkörper (7) zumindest teilweise aus einem zu detektierenden Material gebildet ist und/oder ein Element (10) enthält, welches aus dem zu detektierenden Material gebildet ist, und wobei die Oberfläche des Probenkörpers (7) eine erste Zuordnungskennzeichnung (5) aufweist, die im Rahmen der Kalibrierung, Validierung und/oder Funktionsüberprüfung der Fremdkörpererkennungseinrichtung (11) von der Detektionseinheit (3) erfassbar ist, **dadurch gekennzeichnet, dass** die Detektionseinheit (3) einen berührungsempfindlichen Bildschirm bzw. Touchscreen (15) aufweist und über diesen Bildschirm bzw. Touchscreen (15) mindestens eine manuelle Signatur und/oder Unterschrift im Rahmen der Funktionsüberprüfung der Fremdkörpererkennungseinrichtung (11) erfassbar ist.

12. System nach Anspruch 11, bei dem der Probenkörper (7) zumindest teilweise aus metallischem oder metallähnlichem oder -haltigem Material gebildet ist und/oder ein Element (10) enthält, welches aus Metall oder metallähnlichem oder -haltigem Material gebildet ist.

## Claims

1. A method for calibrating, validating, and/or testing the functionality of a foreign object detection device (11) for use in conveying foods, drugs, or other packaged or bulk products (13, 27), said method employing at least one test specimen (7), which is guided through a detection area of the foreign object detection device (11) along a transport path (T) for generating a response signal or a trigger signal, wherein the test specimen (7) is at least partly formed from a material that is to be detected and/or comprises an element (10) that is to be detected and wherein a first allocation identification mark (5) is applied to the surface of the test specimen (7) and a detection unit (3) detects the first allocation identification mark (5) in the course of testing the functionality of the foreign object detection device (11), said detection unit (3) being assigned to a user or being handled or controlled by said user, the method **characterised in that** the detection unit (3) comprises a touch-sensitive display or a touch screen (15) and **in that** said display or touch screen (15) detects at least one manual signature mark and/or signature in the course of testing the functionality of the foreign object detection device (11).

2. The method according to claim 1 wherein the test specimen (7) is at least partly formed from metal or a metalliferous material and/or comprises a metal or metalliferous element (10).

3. The method according to claim 1 wherein the test specimen (7) is at least partly formed from a non-metalliferous material, such as glass, ceramic, or the like, and/or comprises a non-metalliferous element (10).

4. The method according to one of the claims 1 to 3 wherein there is a second allocation identification mark (6) for the foreign object detection device (11), said second allocation identification mark (6) being assigned to said foreign object detection device (11) and being detected by the detection unit (3) in the course of testing the functionality of the foreign object detection device (11).

5. The method according to one of the claims 1 to 4 wherein there is a third allocation identification mark (8) for the products (13), said third allocation identification mark (8) being assigned to the packaged or bulk products (13, 27) and being detected by the detection unit (3) in the course of testing the functionality of the foreign object detection device (11).

6. The method according to one of the claims 1 to 5 wherein the first allocation identification mark (5) is a two-dimensional code applied to the surface of the test specimen (7) by means of laser engraving.

7. The method according to claim 5 wherein the third allocation identification mark (8) is a bar code or an EAN bar code assigned to the product (13) or enclosed with the product (13) on a product card (14).

8. The method according to one of the claims 1 to 7 wherein the foreign object detection device (11) is formed by a metal detector or an X-ray detector and the detection unit (3) is formed by a mobile or stationary detection unit.

9. The method according to claim 8 wherein the stationary detection unit (3) is structurally and/or constructionally assigned to or integrated into the foreign object detection device (11).

10. The method according to one or more of the claims 1 to 9 wherein the detection unit (3) generates a test report, either independently or in an operative connection with external apparatuses.

11. A system for calibrating, validating, and/or testing the functionality of a foreign object detection device (11) for use in conveying foods, drugs, or other packaged or bulk products (13, 27), the system having at least one detection unit and at least one test specimen (7), which may be guided through a detection area of the foreign object detection device (11) along a transport path (T) for generating a trigger signal of the foreign object detection device (11), wherein the test specimen (7) is at least partly formed from a material that is to be detected and/or comprises an element (10) that is formed from the material that is to be detected and wherein the surface of the test specimen (7) possesses a first allocation identification mark (5), which is detectable by the detection unit (3) in the course of calibrating, validating and/or testing the functionality of the foreign object detection device (11), the system **characterised in that** the detection unit (3) comprises a touch-sensitive display or a touch screen (15) and **in that** said display or touch screen (15) detects at least one manual signature mark and/or signature in the course of testing the functionality of the foreign object detection device (11).

12. The system according to claim 11 wherein the test specimen (7) is at least partly formed from metal or a metal-like or metalliferous material and/or comprises an element (10) that is formed from metal or a metal-like or metalliferous material.

## Revendications

1. Procédé de calibrage, de validation et/ou de contrôle de fonctionnement d'un dispositif de détection de corps étrangers (11) lors du transport de denrées alimentaires, de médicaments ou d'autres produits emballés ou en vrac (13, 27), en utilisant au moins une éprouvette (7) que l'on fait passer à travers une zone de détection dudit dispositif de détection de corps étrangers (11), le long d'un chemin de transport (T), pour générer un signal de réponse ou un signal de déclenchement, ladite éprouvette (7) étant réalisée au moins en partie dans un matériau à détecter et/ou contenant un élément à détecter (10), et sur la surface de ladite éprouvette (7) étant apposé un premier marquage d'association (5) et ledit premier marquage d'association (5) étant détecté, dans le cadre du contrôle de fonctionnement du dispositif de détection de corps étrangers (11), par une unité de détection (3) qui est associée à un utilisateur ou bien est manipulée ou commandée par celui-ci, **caractérisé par le fait que** ladite unité de détection (3) comprend un écran sensitif au toucher ou bien écran tactile (15) et qu'au moins une signature et/ou un seing manuel(le) est saisi(e) par cet écran ou bien écran tactile (15) dans le cadre du contrôle de fonctionnement du dispositif de détection de corps étrangers (11).

2. Procédé selon la revendication 1, dans lequel ladite éprouvette (7) est réalisée au moins en partie dans un matériau métallique ou métallifère et/ou contient un élément (10) métallique ou métallifère.

3. Procédé selon la revendication 1, dans lequel ladite éprouvette (7) est réalisée au moins en partie dans un matériau non métallique tel que le verre, la céramique ou similaire et/ou contient un élément (10) non métallique.

4. Procédé selon l'une quelconque des revendications 1 à 3, dans lequel il y a un deuxième marquage d'association (6) pour ledit dispositif de détection de corps étrangers (11), qui est associé à celui-ci et est détecté par ladite unité de détection (3) dans le cadre du contrôle de fonctionnement du dispositif de détection de corps étrangers (11).

5. Procédé selon l'une quelconque des revendications 1 à 4, dans lequel il y a un troisième marquage d'association (8) pour les produits (13) et ledit troisième marquage d'association (8) est associé au produit emballé ou en vrac (13, 27) et est détecté par ladite unité de détection (3) dans le cadre du contrôle de fonctionnement du dispositif de détection de corps étrangers (11).

6. Procédé selon l'une quelconque des revendications 1 à 5, dans lequel ledit premier marquage d'association (5) est ou bien sera apposé au moyen de gravure laser en tant que codage bidimensionnel sur la surface de ladite éprouvette (7).

7. Procédé selon la revendication 5, dans lequel ledit troisième marquage d'association (8) est associé au produit (13) en tant que code à barres ou code-barres EAN ou bien est joint au produit (13) par une carte de produit (14).

8. Procédé selon l'une quelconque des revendications 1 à 7, dans lequel ledit dispositif de détection de corps étrangers (11) est constitué par un détecteur de métaux ou détecteur à rayons X, et ladite unité de détection (3) est constituée par une unité mobile ou stationnaire de détection.

9. Procédé selon la revendication 8, dans lequel ladite unité stationnaire de détection (3) est associée de manière structurale et/ou constructive audit dispositif de détection de corps étrangers (11) ou bien est intégrée à celui-ci.

10. Procédé selon l'une ou plusieurs des revendications 1 à 9, dans lequel ladite unité de détection (3) établit un rapport de contrôle soit indépendamment soit en liaison active avec des dispositifs externes.

11. Système de calibrage, de validation et/ou de contrôle de fonctionnement d'un dispositif de détection de corps étrangers (11) lors du transport de denrées alimentaires, de médicaments ou d'autres produits emballés ou en vrac (13, 27), comprenant une unité de détection et au moins une éprouvette (7) qui peut être transportée à travers une zone de détection dudit dispositif de détection de corps étrangers (11), le long d'un chemin de transport (T), pour générer un signal de déclenchement du dispositif de détection de corps étrangers (11), dans lequel ladite éprouvette (7) est réalisée au moins en partie dans un matériau à détecter et/ou contient un élément (10) qui est réalisé dans ledit matériau à détecter, et dans lequel la surface de ladite éprouvette (7) présente un premier marquage d'association (5) qui peut être détecté par ladite unité de détection (3) dans le cadre du calibrage, de la validation et/ou du contrôle de fonctionnement du dispositif de détection de corps étrangers (11), **caractérisé par le fait que** ladite unité de détection (3) comprend un écran sensitif au toucher ou bien écran tactile (15) et qu'au moins une signature et/ou un seing manuel(le) peut être saisi(e) par cet écran ou bien écran tactile (15) dans le cadre du contrôle de fonctionnement du dispositif de détection de corps étrangers (11).

12. Système selon la revendication 11, dans lequel ladite éprouvette (7) est réalisée au moins en partie dans un matériau métallique ou ressemblant au métal ou métallifère et/ou contient un élément (10) qui est réalisé en métal ou dans un matériau ressemblant au métal ou métallifère.
